# EUROPÄISCHE PATENTSCHRIFT

(11) **EP 3 270 478 B1**
(45) Veröffentlichungstag und Bekanntmachung des Hinweises auf die Patenterteilung: **25.11.2020**
(21) Anmeldenummer: 17180857.9
(22) Anmeldetag: 12.07.2017
(51) Int. Cl.: H01R 9/05, H01R 43/05, H02G 1/12, H01R 43/28

(54) **VORRICHTUNG ZUR BEARBEITUNG VON KABELENDEN**
DEVICE FOR PROCESSING CABLE ENDS
DISPOSITIF D'USINAGE D'EXTRÉMITÉS DE CÂBLE

(30) Priorität: 14.07.2016 DE 102016113004
(43) Veröffentlichungstag der Anmeldung: 17.01.2018
(73) Patentinhaber: Komax SLE GmbH & Co. KG, 94481 Grafenau (DE)
(72) Erfinder: STOCKER, Martin, 6403 Küssnacht (CH); IMGRÜT, Peter, 6330 Cham (CH)
(74) Vertreter: Kramer Barske Schmidtchen Patentanwälte PartG mbB

(56) Entgegenhaltungen:
- DE-A1-102015 208 932
- DE-B3-102012 020 798
- DE-U1-202012 011 623
- JP-A- 2012 050 169
- US-B1- 6 536 103

## Beschreibung

### Technisches Gebiet

Die vorliegende Offenbarung betrifft eine Vorrichtung zum Bearbeiten von Enden eines Kabels, das einen Innenteil und eine den Innenteil umgebende Schirmung aufweist.

### Hintergrund

Ein Koaxialkabel umfasst in der Regel einen Innenleiter und eine Innenleiterisolierung, die den Innenleiter konzentrisch umgibt. Das Koaxialkabel weist auch einen Außenleiter, der die Innenleiterisolierung umgibt und eine Außenleiterisolierung, die den Außenleiter umgibt, auf. Innenleiter kann ein Vollleiter oder ein Litzenleiter sein. Der Außenleiter kann ein Geflecht, das auch als Schirmgeflecht bezeichnet wird, oder eine Folie sein. Der Außenleiter wird auch als Schirmung bezeichnet. Der Außenleiter und der Innenleiter sind aus einem Metall, zum Beispiel Kupfer oder Aluminium, gebildet. Die Innenleiterisolierung und die Außenleiterisolierung sind aus einem elektrischen Nichtleiter, in der Regel aus Kunststoff, gebildet.

Bei der Bearbeitung von Kabelenden eines Koaxialkabels beispielsweise zum Anbringen einer Steckverbindung kann es notwendig sein, die den Innenteil des Koaxialkabels umgebene Schirmung teilweise abzutrennen und den verbliebenen Teil der Schirmung zur weiteren Verwendung nach hinten umzustülpen.

Im Stand der Technik sind eine Reihe von Vorrichtungen und Verfahren zum automatisierten oder teilweise automatisierten Bearbeiten von Kabelenden bekannt.

Die EP 2 871 733 A1 offenbart eine Vorrichtung zum Schneiden eines aufgestellten Schirms eines Kabels. Die Vorrichtung umfasst eine Halteanordnung/Klemmvorrichtung zum Klemmen des Kabels, eine Schneideeinrichtung sowie eine Sensor- und Steuereinrichtung. Für das abgemantelte Ende des Kabels ist eine buchsenförmige Aufnahme vorgesehen, welche in axialer Richtung aus zwei relativ zueinander bewegbaren Abschnitten besteht. Deren einander zugewandte Stirnseiten liegen in einer Endstellung aneinander an. Die Schneideeinrichtung weist zumindest eine außerhalb der buchsenförmigen Aufnahme bewegliche Schneide auf.

Ein weiteres Beispiel ist in der DE 10 2013 213 265 B3 offenbart. Hier wird eine Vorrichtung zum Abtrennen eines Außenleiterabschnitts eines Außenleiters eines Koaxialkabels beschrieben. Die Vorrichtung umfasst einen Aufnahmeraum, welcher angepasst ist, einen Teil des Koaxialkabels aufzunehmen, und eine Scherschneideinrichtung, welche wenigstens eine erste Schneide und eine zweite Schneide aufweist. Die zweite Schneide wird von einer Hülse gebildet, deren Durchmesser so bemessen ist, dass die Hülse zwischen dem abzutrennenden Außenleiterabschnitt und der Innenleiterisolierung des Koaxialkabels positionierbar ist, wobei die wenigstens eine erste Schneide außerhalb des abzutrennenden Außenleiterabschnitts positionierbar ist, die zweite Schneide und die wenigstens eine erste Schneide relativ zueinander bewegbar und aneinander vorbeibewegbar sind. Zwischen der ersten Schneide und der zweiten Schneide wird ein Schneidspalt gebildet, sodass der zwischen der wenigstens einen ersten Schneide und der zweiten Schneide positionierbare Außenleiter des Koaxialkabels durchtrennt wird. Die wenigstens eine erste Schneide ist dabei so gelagert, dass sie zum Durchtrennen des Außenleiters quer zu der Mittelachse der Hülse bewegbar und an der zweiten Schneide vorbeibewegbar ist, wobei die wenigstens eine erste Schneide mehrere Schneiden umfasst, die zum Durchtrennen des Außenleiters relativ zueinander bewegbar sind.

JP 2012 050169 A offenbart ein Verfahren zur Verarbeitung von Anschlüssen eines abgeschirmten Kabels, das eine Reihe von Bearbeitungen mit hoher Geschwindigkeit realisiert. Ein Teil eines Geflechts wird mittels eines inneren Messers 4 und eines äußeren Messers 8 abgeschnitten, wobei ein Aufweitungsrohr mit einem inneren Zylinder und einem äußeren Zylinder verwendet wird.

DE 20 2012 011 623 U1 offenbart ein Bearbeitungsmodul für eine Drahtgeflecht-Trennvorrichtung mit mindestens einem Trennelement, einem Antrieb, welcher mit dem Trennelement verbunden ist, einer Zwangsführung, in der das Trennelement geführt wird, und einem Element zur Lageänderung des Geflechts. Das Trennelement ist ein Rohr, das an seinem einen Ende als kreisrundes Messer mit flacher Schneide ausgebildet ist.

DE 10 2015 208 932 A1 offenbart ein Verfahren zur Herstellung eines Kabels mit folgenden Schritten: Entfernen eines Mantels an einem Ende des Kabels, Anbringen einer Stützschelle in einer Weise, dass die Stützschelle mit dem Schirm elektrisch kontaktiert ist, Abtrennen eines Endes des Schirms in einer Weise, dass nach dem Abtrennen die Länge des Überstands kürzer ist als der radiale Abstand, wenn der Schirm radial nach außen gestülpt ist, und Montieren der Hülse, so dass die Hülse radial außerhalb der Stützschelle angeordnet ist.

DE 10 2012 020 798 B3 zeigt ein Verfahren zum automatisierten Bearbeiten eines Endes eines Kabels.

US 6 536 103 B1 offenbart ein Werkzeug zum Installieren eines Koaxialkabelverbinders.

Die vorliegende Offenbarung ist darauf gerichtet, eine Vorrichtung zur Bearbeitung von Kabelenden vorzusehen, die Nachteile im Stand der Technik überwindet und insbesondere eine verbesserte Steuerbarkeit und Genauigkeit aufweist.

### Zusammenfassung

In einem ersten Aspekt ist vorliegende Offenbarung auf eine Vorrichtung zum Bearbeiten eines Kabelendes eines Kabels gemäß Anspruch 1 gerichtet.

Die Vorrichtung gemäß dem obigen Aspekt sieht eine erste Antriebseinheit für die Zentriervorrichtung und eine zweite Antriebseinheit für den Schneidkörper vor. Damit ist der Antrieb der Zentriervorrichtung unabhängig von dem Antrieb des Schneidkörpers. Folglich können beide unabhängig voneinander angesteuert und bewegt werden, was die Steuerbarkeit, Flexibilität und Genauigkeit der Bearbeitung erhöht.

Nach der Erfindung, ist die erste Antriebseinheit unabhängig von der zweiten Antriebseinheit vorgesehen und die erste Antriebseinheit ist dazu ausgebildet ist, die Zentriervorrichtung gesteuert zu bewegen.

Damit kann die Zentriervorrichtung zu (vor-) definierten Punkten im Arbeitsraum von der ersten Antriebseinheit verfahren werden, was ein größeres Maß an Kontrolle über den Bearbeitungsvorgang ermöglicht.

Nach der Erfindung, weist die Matrize ferner eine an die Durchgangsöffnung angrenzende, senkrecht zur Axialrichtung verlaufende Anlagefläche auf. Der abzutrennende Bereich der aufgeweiteten Schirmung des Kabels liegt zumindest teilweise an der Anlagefläche an, wenn der Schneidkörper sich in die Durchgangsöffnung der Matrize bewegt und dabei den abzutrennenden Bereich abtrennt.

Nach der Erfindung, weist die Vorrichtung ferner eine Schirmungsklemmvorrichtung auf, die von einer dritten Antriebseinheit in der Axialrichtung in Richtung zu der Matrize bewegbar ist und eine Klemmfläche aufweist. Die Klemmfläche ist so ausgebildet, dass die aufgeweitete Schirmung zwischen der Klemmfläche und der Anlagefläche einklemmbar ist.

Somit kann ein Bereich der Schirmung für den Schneidvorgang (Abtrennvorgang) durch den Schneidkörper zwischen der Klemmfläche der Schirmungsklemmvorrichtung und der Anlagefläche der Matrize eingeklemmt und fixiert werden, sodass eine prozesssichere Abtrennung eines vorderen Bereichs der Schirmung ermöglicht wird.

Nach der Erfindung, ist die Schirmungsklemmvorrichtung so unmittelbar oder mittelbar an dem Schneidkörper gelagert ist, dass eine durch die zweite Antriebseinheit bewirkte Bewegung des Schneidkörpers zu einer entsprechenden Bewegung der Schirmungsklemmvorrichtung führt und eine durch die dritte Antriebseinheit bewirkte Bewegung der Schirmungsklemmvorrichtung zu keiner entsprechenden Bewegung des Schneidkörpers führt.

Die von dem Schneidkörper zu der Schirmungsklemmvorrichtung gekoppelte Bewegung ermöglicht zunächst, dass die Klemmfläche der Schirmungsklemmvorrichtung kurz vor dem Schneiden des Schirms bereits nahe der Anlagefläche positioniert werden kann. Die darauffolgende Bewegung der Klemmfläche zum Fixieren eines Bereichs der Schirmung ist ungekoppelt mit dem Schneidkörper. Letztlich wird während des eigentlichen Schneidens durch den Schneidkörper die Antriebseinheit der Schirmungsklemmvorrichtung so gesteuert, dass die Bewegung des Schneidkörpers ausgeglichen bzw. aufgenommen wird (zum Beispiel durch einen Pneumatik- oder Hydraulikzylinder), ohne dass sich die Schirmungsklemmvorrichtung bewegt, d.h. der abgetrennte Bereich noch immer zwischen der Klemmfläche und der Anlagefläche eingeklemmt ist.

In einem Ausführungsbeispiel weist die Vorrichtung ferner einen Druckluftkanal zum Zuführen von Druckluft zur Aufweitung der Schirmung auf. Der Druckluftkanal ist mit einer Druckluftquelle verbunden und mündet in einen Ringraum, der eine Außenmantelfläche der Zentriervorrichtung umgibt.

Das Zuführen von Druckluft verbessert die radiale Aufweitung der Schirmung und unterstützt insbesondere die Anlage der Schirmung an der Anlagefläche der Matrize, sodass der Schneidvorgang sicher und mit reproduzierbaren Ergebnissen durchgeführt werden kann.

In einem Ausführungsbeispiel weist die Vorrichtung ferner eine Stülphülse auf, die in der Axialrichtung in Richtung zu der Matrize bewegbar und dazu ausgebildet ist, bei einer Bewegung in die Durchgangsöffnung einen nicht von dem Schneidkörper abgetrennten Bereich der Schirmung in einer Richtung entgegengesetzt zu der Zentriervorrichtung umzustülpen.

Folglich kann die nicht abgetrennte Schirmung beispielsweise über eine zuvor montierte Stützhülse umgestülpt und zur Anlage an die Stützhülse gebracht werden. Damit ist zumindest die umgestülpte Schirmung bereit zur Montage eines Steckers bzw. Verbinders in einem weiteren Montageschritt.

In einem Ausführungsbeispiel ist die Stülphülse mit dem Schneidkörper verbunden, insbesondere integral ausgebildet.

Folglich kann die Stülphülse gemeinsam mit dem Schneidkörper von der zweiten Antriebseinheit bewegt werden, sodass direkt anschließend an das Schneiden durch den Schneidkörper eine Umstülpung des nicht abgetrennten Bereichs der Schirmung erfolgen kann.

In einem Ausführungsbeispiel ist die Zentriervorrichtung innerhalb der Stülphülse axial verschiebbar geführt wird.

Damit kann der erforderliche Raumbedarf für die Vorrichtung reduziert werden und gleichermaßen erfolgt eine Ausrichtung der Zentriervorrichtung zur Stülphülse.

In einem Ausführungsbeispiel weist die Vorrichtung ferner einen Abführkanal auf, der mit einer Ansaugquelle verbunden und so angeordnet ist, dass durch eine Eingangsöffnung des Abführkanals während des Bearbeitungsvorgangs abgetrennte Teile des Kabels absaugbar sind.

In einem Ausführungsbeispiel weist die Vorrichtung ferner eine Aufweitungsvorrichtung auf, die dazu ausgebildet ist, die Schirmung des Kabels umlaufend an mehreren Punkten zu quetschen, sodass die Schirmung sich radial aufweitet.

Die eingangs durch die Aufweitungsvorrichtung durchgeführte Aufweitung der Schirmung ermöglicht, dass die Zentriervorrichtung besser zwischen die bereits radial aufgeweitete Schirmung und den Innenteil des Kabels einfahren und die Schirmung weiter auf weiten kann.

In einem Ausführungsbeispiel weist die Vorrichtung ferner eine Kabelklemmvorrichtung auf, die dazu ausgebildet ist, das Kabel während der Bearbeitung in der Kabelklemmvorrichtung zu fixieren.

### Kurze Beschreibung der Zeichnungen

Die angehängten Figuren zeigen einzelne beispielhafte Bearbeitungsschritte mit einer beispielhaften Ausführungsform der Vorrichtung zur Bearbeitung von Kabelenden in einer beispielhaften Bearbeitungsreihenfolge von Fig. 1 bis Fig. 11 sowie einen optionalen Vorprozess in Fig. 12.
Fig. 1 zeigt eine beispielhafte Ausführungsform einer Vorrichtung zur Bearbeitung von Kabelenden vor Beginn der Kabelbearbeitung zur Beschreibung der einzelnen Komponenten der Vorrichtung.
Fig. 2 zeigt einen Teil der Vorrichtung von Fig. 1 während einer Zuführbewegung des Kabels.
Fig. 3 zeigt den Teil der Vorrichtung von Fig. 2 während ein zu bearbeitendes Kabelende eines Kabels in einer Aufweitungsvorrichtung gehalten wird.
Fig. 4 zeigt die Vorrichtung von Fig. 1 während ein freigelegter Innenteil des Kabels in einer Zentrierhilfe zentriert wird.
Fig. 5 zeigt die Vorrichtung von Fig. 1 mit dem Kabel in einer Bearbeitungsposition zum Umstülpen und teilweisen Schneiden einer Schirmung des Kabels.
Fig. 6 zeigt die Vorrichtung von Fig. 1 während einer weiteren Aufweitung der Schirmung des Kabels.
Fig. 7 zeigt die Vorrichtung von Fig. 1 mit geklemmter Schirmung.
Fig. 8 gezeigt die Vorrichtung von Fig. 1 während eines Schneidvorgangs, bei dem ein Teil der Schirmung abgeschnitten wird.
Fig. 9 zeigt die Vorrichtung von Fig. 1 während die gekürzte Schirmung an eine Stützhülse angelegt wird.
Fig. 10 zeigt die Vorrichtung von Fig. 1 nach dem Bearbeitungsschritt des Umstülpens.
Fig. 11 zeigt die Vorrichtung von Fig. 1, während eine Isolation des Kabels eingeschnitten und abgezogen wird.
Fig. 12 zeigt einen optionalen Vorprozess, in dem die freigelegte Schirmung glatt gebürstet wird.

### Ausführliche Beschreibung

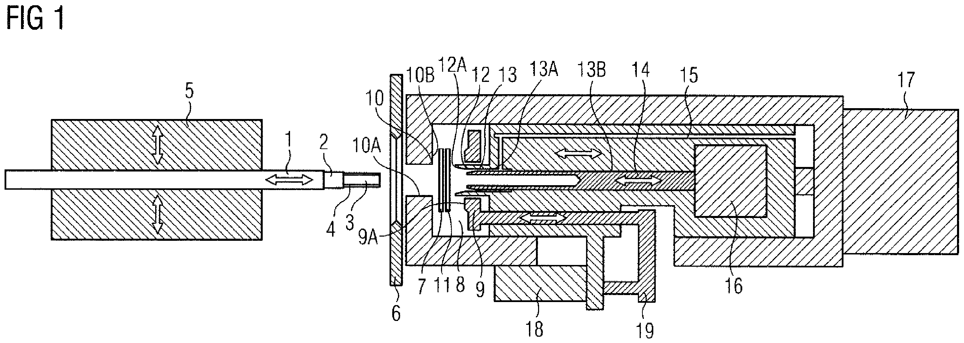

Unter Bezugnahme auf die Fig. 1 ist ein Kabel bzw. eine Leitung 1 dargestellt, deren Ende (rechtes Ende in Fig. 1) mittels einer Vorrichtung gemäß der vorliegenden Offenbarung zu bearbeiten ist. Das Kabel 1 weist einen sich in Längsrichtung des Kabels 1 erstreckenden Innenteil 3 auf, der aus einem oder mehreren Innenleitern (Innenlitzen) und einer diesen umgebenden, koaxial angeordneten Isolation (Dielektrikum, Innenleiterisolierung) gebildet wird. Zusätzlich kann der Innenteil 3 eine (metallische) Folie aufweisen, die sich ebenfalls in Längsrichtung des Kabels 1 erstreckt und die Isolation konzentrisch umgibt. Das Kabel 1 weist ferner eine hohlzylindrische Schirmung 4 auf, die konzentrisch um den Innenteil 3 vorgesehen und von einem Kabelschutzmantel (Außenleiterisolierung) umgeben ist. Die Schirmung 4 dient einerseits zum Abschirmen des Innenleiters des Innenteils 3 vor elektromagnetischer Störausstrahlung und zum anderen als Außenleiter. In anderen Ausführungsformen kann das Kabel 1 einen anderen Aufbau mit einer einen Innenteil umgebenden, zu bearbeitenden Schirmung des Kabels aufweisen. Insbesondere handelt es sich beim Kabel 1 um ein Koaxialkabel.

Wie in der Fig. 1 zu sehen ist, ist das zu bearbeitenden Kabelende (rechtes Ende) für die Bearbeitung durch die Vorrichtung gemäß der vorliegenden Offenbarung vorbereitet. Dies umfasst, dass der Kabelschutzmantel des Kabels 1 am zu bearbeitenden Kabelende bereits abgezogen bzw. entfernt wurde. Zusätzlich kann in einer bevorzugten Ausführungsform des Bearbeitungsverfahrens eine Stützhülse 2 über dem zu bearbeitenden Kabelende montiert sein, sodass die Stützhülse 2 an der Stirnseite des gekürzten Schutzmantels des Kabels 1 anliegt. Die Stützhülse 2 umgibt also den Innenteil 3 und die Schirmung 4 konzentrisch. Die Stützhülse 2 ist vorzugsweise so vorgesehen, dass eine Innenzylindermantelfläche der Stützhülse 2 und eine Außenzylindermantelfläche der Schirmung 4 aneinander anliegen. Die Stützhülse 2 ist ferner so ausgebildet, dass sie sich lediglich entlang eines Abschnitts des vom Kabelschutzmantel abgemantelten Kabelendes erstreckt, wie in Fig. 1 dargestellt ist. Zum Beispiel erstreckt sich die Stützhülse 2 in einem Bereich von ungefähr 20 % bis ungefähr 50 % des abgemantelten Kabelendes des Kabels 1.

Bevor nachfolgend im Detail auf die von der Vorrichtung gemäß der vorliegenden Offenbarung durchgeführten Bearbeitungsschritte eingegangen wird, werden die einzelnen Elemente der Vorrichtung beschrieben.

Die Vorrichtung weist eine Kabelklemmvorrichtung 5, eine Aufweitungsvorrichtung bzw. Vorzentriervorrichtung 6 und ein Schneidmodul auf, die nachfolgend beschrieben sind.

Die Kabelklemmvorrichtung 5 ist dazu ausgebildet, das Kabel 1 in einer Klemmstellung sicher und fixiert in der Klemmvorrichtung 5 zu halten. In einer Freigabestellung, kann das Kabel 1 zumindest in der Axialrichtung relativ zur Kabelklemmvorrichtung 5 frei bewegbar sein. In der Klemmstellung klemmen einander gegenüberliegende Klemmflächen der Kabelklemmvorrichtung 5 das Kabel 1 zwischen sich ein, sodass eine Relativbewegung in einer Axialrichtung des Kabels 1 zwischen dem Kabel 1 und der Kabelklemmvorrichtung 5 verhindert wird. Ferner kann einer Drehbewegung des Kabels 1 um dessen Längsachse während der Bearbeitung entgegengewirkt und diese verhindert werden. In einigen Ausführungsformen kann die Klemmvorrichtung zusätzlich so verfahren werden, dass das Kabel 1 in der Klemmstellung zusammen mit der Klemmvorrichtung 5 zumindest in Richtung von dessen Längsachse (also in Axialrichtung) bewegbar ist. In einigen Ausführungsformen kann mittels eines Auslösers 7 (nur schematisch dargestellt) bestimmt werden, ob sich das Kabel 1 in der gewünschten Position zum Klemmen durch die Kabelklemmvorrichtung 5 befindet. Ansprechend auf eine Berührung des Auslösers 7 mit einer Stirnfläche (rechte Stirnfläche in Fig. 1) des Kabelendes des Kabels 1 kann beispielsweise die Kabelklemmvorrichtung 5 durch eine Steuerung (nicht dargestellt) betätigt werden. Alternativ kann der Auslöser beispielsweise optisch und damit berührungslos arbeiten.

Zusätzlich weist die Vorrichtung eine Aufweitungsvorrichtung 6 auf. Die Aufweitungsvorrichtung 6 ist dazu ausgebildet, das abgemantelte Kabelende so zu quetschen, dass sich die Schirmung 4 radial aufweitet. Hierzu setzen die Quetschmittel der Aufweitungsvorrichtung 6 in einem Bereich vor der Stützhülse 2 des Kabelendes (Bereich zwischen dem Ende des Kabels und der Stützhülse) an und bewegen sich in radialer Richtung des Kabels aufeinander zu. Die Aufweitungsvorrichtung dient ferner zur Zentrierung des Kabels 1. In anderen Ausführungsformen kann keine Aufweitungsvorrichtung vorhanden sein und/oder eine separate Vorzentrierungsvorrichtung vorhanden sein.

Unter der Wirkung der Quetschung durch die Aufweitungsvorrichtung 6 wird die Schirmung in einem Quetschbereich radial nach innen, je nach Grad der Quetschung auch in die Innenleiterisolierung gequetscht, was dazu führt, dass die Schirmung 4 sich insbesondere durch plastische Verformung auf der der Stützhülse 2 angewandten Seite der Aufweitungsvorrichtung 6 aufweitet. Die Quetschflächen der Aufweitungsvorrichtung 6 bewegen sich allerdings nicht so weit aufeinander zu, dass der Innenteil 3 des Kabels 1 in dessen Funktion beeinträchtigt wird. Die Aufweitungsvorrichtung 6 kann beispielsweise in Form einer Irisblende vorgesehen sein, deren Öffnungsweite veränderlich ist und die unabhängig von ihrer Öffnungsweite eine im Wesentlichen kreisförmige Öffnung mit veränderbarem Durchmesser aufweist. Alternativ kann die Aufweitungsvorrichtung 6 beispielsweise mittels einer oder mehrerer anderer bewegbaren Quetschelemente realisiert werden, die eine möglichst gleichmäßige Quetschung (und somit Aufweitung) um den Umfang der Schirmung 4 bewirken.

Das Schneidmodul der Vorrichtung gemäß der vorliegenden Offenbarung weist eine Mehrzahl von Vorrichtungen auf, zum Beispiel einen Abführkanal 8, eine Schirmungsklemmvorrichtung 9, eine Matrize 10, eine Schneidvorrichtung 11 und einen Schneidkörper 12, eine (Um-) Stülphülse 13, eine Zentriervorrichtung 14, einen Druckluftkanal 15 sowie Antriebseinheiten 16, 17 und 18.

Der in dem Schneidmodul vorgesehene Abführkanal 8 ist so vorgesehen, dass im Bearbeitungsverfahren anfallender Abfall (zum Beispiel abgetrennte Enden der Schirmung 4, abgetrennte Isolierung des Innenteils 3 des Kabels 1) aus dem Schneidmodul abgeführt werden können. In einigen Ausführungsformen kann hierzu beispielsweise eine Ansaugvorrichtung mit dem Abführkanal 8 verbunden werden, sodass lose Einzelteile aus dem Schneidmodul über den Abführkanal 8 abgesaugt werden können. Die Ansaugvorrichtung kann fortwährend oder immer dann betrieben werden, wenn Abfall anfällt.

Die Schirmungsklemmvorrichtung 9 ist axial bewegbar in dem Schneidmodul durch eine Führung 19 gelagert. Zur Axialbewegung der Schirmungsklemmvorrichtung 9 ist eine (dritte) Antriebseinheit 18 vorgesehen. Die Antriebseinheit 18 kann beispielsweise als ein Pneumatik- oder Hydraulikzylinder mit einem bewegbaren Kolben ausgebildet sein. Alternativ könnte die Antriebseinheit 18 beispielsweise ein Elektromotor sein. Die Antriebseinheit 18 kann am Gehäuse oder einer anderen Komponente des Schneidmoduls befestigt sein. In der dargestellten Ausführungsform ist die Antriebseinheit 18 an einem Bereich der Stülphülse 13 (der Einheit aus Stülphülse 13 und Schneidkörper 12) befestigt und bewegt sich mit dieser. Die Führung 19 der Schirmungsklemmvorrichtung 9 erstreckt sich teilweise durch einen Bereich der Stülphülse 13 und ist relativ zu dieser durch einen Antrieb von der Antriebseinheit 18 bewegbar. Damit ist die Schirmungsklemmvorrichtung 9 relativ zu der Stülphülse 13 bewegbar.

Mit anderen Worten gesagt, ist in der dargestellten Ausführungsform die Schirmungsklemmvorrichtung 9 so unmittelbar oder mittelbar an dem Schneidkörper 12 gelagert, dass eine durch die zweite Antriebseinheit 17 bewirkte Bewegung des Schneidkörpers 12 zu einer entsprechenden Bewegung der Schirmungsklemmvorrichtung 9 führt, sodass sich sowohl der Schneidköper 12 (Stülphülse 13) als auch die Schirmungsklemmvorrichtung 13 gemeinsam relativ zum Rahmen bzw. Gehäuse des Schneidmoduls bewegen. Ferner führt eine durch die dritte Antriebseinheit 18 bewirkte Bewegung der Schirmungsklemmvorrichtung 9 relativ zum Rahmen bzw. Gehäuse des Schneidmoduls zu keiner entsprechenden Bewegung des Schneidkörpers 12 relativ zum Rahmen bzw. Gehäuse des Schneidmodul führt.

Die Schirmungsklemmvorrichtung 9 weist einen ringförmigen Körper auf, durch deren Mittelöffnung sich ein vorderer Bereich des Schneidkörpers 12 und der Zentriervorrichtung 14 erstrecken. Der ringförmige Körper weist eine ringförmige Klemmfläche 9A auf, die zum Klemmen und Fixieren der Schirmung 4 (d.h., eines abzutrennenden Bereichs 4B der Schirmung 4) verwendet wird, wie später genauer beschrieben ist. Die Klemmfläche ist in Richtung zu der Matrize 10 ausgerichtet. Eine Innenkante der Klemmfläche 9A ist bündig zu einer Innenkante einer Anlagefläche 10B der Matrize 10.

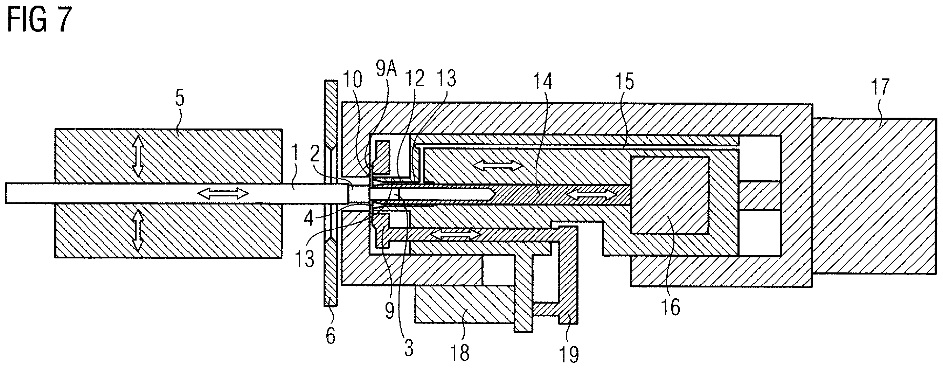

Die Matrize 10 weist eine beispielsweise kreisförmige Durchgangsöffnung (ein Durchgangsloch) 10A und die Anlagefläche 10B für die Schirmung 4 auf. Die Anlagefläche 10B grenzt an einer Stirnseite der Durchgangsöffnung 10A an (Stirnseite, die weg von der Kabelklemmvorrichtung 5 gerichtet ist bzw. in Richtung zu der Klemmfläche 9A gerichtet ist). Der Innendurchmesser der Klemmfläche 9A entspricht dem durch die Durchgangsöffnung 10A gebildeten Innendurchmesser der Anlagefläche 10B. Der Durchmesser der Durchgangsöffnung 10A bzw. der Innenkante der Anlagefläche 10B ist so gewählt, dass ein Abstand zwischen der Innenkante der Anlagefläche 10B und einer Außenumfangsfläche des Innenteils 3 des Kabels 1 im Wesentlichen der gewünschten Länge der herzustellenden Umstülpung der Schirmung 4 in Axialrichtung entspricht (vgl. insbesondere Fig. 7). Zudem ist der Innendurchmesser der Durchgangsöffnung 10A der Matrize 10 so gewählt, dass das Kabel 1 mit dessen aufgeweiteter Schirmung 4 nach der Aufweitung durch die Durchgangsöffnung 10A passt, ohne dass die aufgeweitete Schirmung 4 bei Einfahrt in die Matrize 10 abgeknickt wird. Alternativ kann das Kabelende des Kabels 1 bereits ein wenig in der Durchgangsöffnung 10A positioniert sein, wenn die Aufweitungsvorrichtung 6 die Schirmung 4 aufweitet, sodass ein Abknicken der aufgeweiteten Schirmung 4 bei Einfahrt in die Durchgangsöffnung 10A verhindert wird.

Die Schneidvorrichtung 11 ist dazu ausgebildet, den Innenteil 3 des Kabels 1 abzuisolieren. D.h., die Schneidvorrichtung 11 trennt die Isolierung des Innenteils 3 in einer Umfangsrichtung um den Innenteil 3 herum auf. Die Isolierung kann dann durch eine nunmehr mögliche Relativbewegung zwischen der abgetrennten Isolierung und dem übrigen Innenteil 3 des Kabels 1 von dem Kabel 1 abgezogen werden.

Der Schneidkörper 12 und die Stülphülse 13 sind integral miteinander ausgebildet. Der Schneidkörper 12 und die Stülphülse 13 sind axial beweglich in dem Schneidmodul gelagert. Eine (zweite) Antriebseinheit 17, die beispielsweise als Pneumatikantrieb, Hydraulikantrieb oder Elektromotor ausgebildet sein kann, ist trieblich mit der Einheit aus Schneidkörper 12 und Stülphülse 13 verbunden, sodass diese in der Axialrichtung bewegbar ist. In einigen Ausführungsformen kann die Einheit aus Schneidkörper 12 und Stülphülse 13 zusätzlich in einer Umfangsrichtung um die Längsachse gedreht werden. Der Außenumfang des ringförmigen Schneidkörpers 12 ist so angepasst, dass er durch die Durchgangsöffnung 10A der Matrize 10 passt. Der Schneidkörper 12 ist als ein Schneidstempel ausgebildet. Eine ringförmige Schneidkante 12A des Schneidkörpers 12 wirkt beim Einfahren des Schneidkörpers 12 in die Matrize 10 mit der Innenkante der Anlagefläche 10B der Matrize 10 zusammen, sodass die Schneidwirkung zwischen der Innenkante der Matrize 10 und der Schneidkante 12A des Schneidkörpers 12 hervorgerufen wird, wie später näher beschrieben ist. Die Einheit aus Schneidkörper 12 und Stülphülse 13 ist bezüglich der Zentriervorrichtung 14 und der Schirmungsklemmvorrichtung 9 bewegbar gelagert.

Die Stülphülse 13 wiederum erstreckt sich innenliegend von der Schneidkante 12A des Schneidkörpers 12 und in Richtung entgegengesetzt zu der Matrize 10. Die Stülphülse 13 weist einen Innenkanal auf, durch den sich die Zentriervorrichtung 14 erstreckt. Der Innenkanal der Stülphülse 13 weist einen ersten vorderen Bereich 13A und einen sich in Richtung weg von dem Schneidkörper 12 erstreckenden und daran anschließenden zweiten hinteren Bereich 13B auf. Der vordere Bereich 13A weist einen größeren Durchmesser als der hintere Bereich 13B auf. Die Stülphülse 13 weist im Bereich der Schneidkante 12A der Schneidkörpers 12 eine innenkonusförmige Ringfläche auf, mit deren Hilfe die Schirmung 4 das Kabelendes des Kabels 1 nach der Abtrennung des äußeren Endes der Schirmung 4 über die Stützhülse 2 umgestülpt werden kann.

Die Zentriervorrichtung 14 ist trieblich mit der (ersten) Antriebseinheit 16 verbunden, die wiederum beispielsweise als Pneumatikantrieb, Hydraulikantrieb oder Elektromotor ausgebildet sein kann. Die Antriebseinheit 16 kann die Zentriervorrichtung 14 in der Axialrichtung bewegen. Die Antriebseinheit 16 kann bspw. an einem Gehäuse der Kabelendenbearbeitungsvorrichtung oder an einem hinteren Körperbereich des Schneidkörpers 13 gelagert sein. Der Außendurchmesser der Zentriervorrichtung 14 ist so angepasst, dass er geringfügig kleiner als der Durchmesser des zweiten Bereichs 13B der Stülphülse 13 ist, womit ein hohler Ringraum zwischen der Zentriervorrichtung 14 und dem ersten Bereich 13A der Stülphülse 13 ausgebildet wird. Die Zentriervorrichtung 14 weist einen Innenkanal 14A, zum Beispiel eine Sacklochbohrung, auf. Der Durchmesser des Innenkanals 14B ist bezüglich des Außendurchmessers des Innenteils 3 des Kabels 1 angepasst, sodass der Innenteil 3 im Bereich des Kabelendes des Kabels 1 zumindest teilweise im Innenkanal 14A der Zentriervorrichtung 14 zur Zentrierung des Kabels 1 aufgenommen werden kann. Die Zentriervorrichtung 14 ist relativ zu der Einheit aus Stülphülse 13 und Schneidkörper 12 sowie zu der Schirmungsklemmvorrichtung 9 bewegbar gelagert.

Durch einen hinteren Körperbereich der Stülphülse 13 erstreckt sich der Druckluftkanal 15. Der Druckluftkanal 15 mündet in den ersten Bereich 13A und somit in den Ringraum zwischen dem ersten Bereich 13A und der Zentriervorrichtung 14. Der Druckluftkanal 15 ist mit einer nicht dargestellten Druckluftquelle verbunden, die Druckluft in den Ringraum zuführen kann. Die Druckquelle kann beispielsweise dazu ausgebildet sein, Druckluft mit einem Druck in einem Bereich von 2.0 bar bis 20.0 bar zuzuführen.

Die Antriebseinheiten 16 und 17 werden von einer nicht dargestellten Steuerung gesteuert, sodass der Schneidkörper 12, die Stülphülse 13 und die Zentriervorrichtung 14 gesteuert (d.h., mit gesteuertem oder geregeltem, definiertem Endpunkt der Bewegung) bewegt werden.

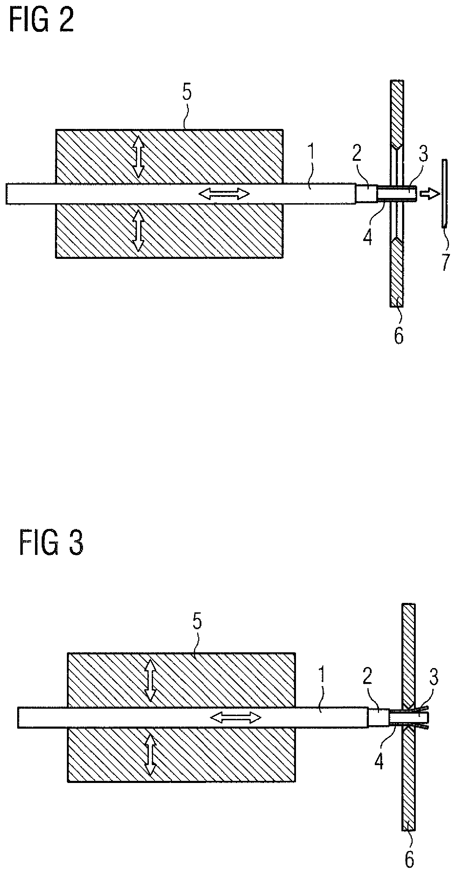

Nachfolgend ist das von der oben beschriebenen Vorrichtung ausgeführte Bearbeitungsverfahren zur Bearbeitung eines Kabelendes des Kabels 1 unter Bezugnahme auf die Fig. 2 bis 12 beschrieben.

In der Fig. 2 ist zu sehen, dass das Kabel 1 der Vorrichtung in einem Zustand übergeben wird, in dem die Außenleiterisolierung am Kabelende des Kabels 1 bereits abgezogen wurde, d.h. der Mantel des Kabels 1 wurde bereits entfernt. Weiter wurde bereits die Stützhülse 2 aufgebracht.

Die Übergabe zur Vorrichtung erfolgt beispielsweise über ein manuelles oder automatisches Einlegen in die Kabelklemmvorrichtung 5. Bei einer automatischen Zuführung wird der Klemmvorgang durch die Kabelklemmvorrichtung 5 beispielsweise dann initiiert, wenn eine Stirnfläche des Kabelendes des Kabels 1 den Auslöser 7 berührt bzw. betätigt. Die Zuführung kann auch derart erfolgen, dass das zu bearbeitenden Kabel 1 bereits von der Kabelklemmvorrichtung 5 gehalten wird.

Unter Bezugnahme auf die Fig. 3 verfährt in der dargestellten Ausführungsform die Kabelklemmvorrichtung 5 das darin gehaltene Kabel 1 in der Axialrichtung gesteuert bis zu einer gewünschten Position, in der das abgemantelte Kabelende in Axialrichtung über die Aufweitungsvorrichtung 6 um eine definierte Länge vorsteht. Die Stützhülse 2 ist in dieser Position auf der dem Kabelende angewandten Seite der Aufweitungsvorrichtung 6. Dann wird die Schirmung 4 des Kabels 1 durch ein gesteuertes Zusammenfahren der Aufweitungsvorrichtung 6 lokal und umlaufend gequetscht. Dadurch stellt sich die Schirmung 4 auf der Seite des Kabelendes der Aufweitungsvorrichtung 6 am Ende des Kabels 1 leicht auf, wie in Fig. 3 schematisch gezeigt ist. Die umlaufende Quetschung durch die Aufweitungsvorrichtung 6 wird so gesteuert, dass der Innenteil 3 des Kabels 1 nicht zerstört wird.

Alternativ zu der Zustellbewegung durch die Kabelklemmvorrichtung 5 in der Axialrichtung kann beispielsweise die Aufweitungsvorrichtung 6 und/oder das gesamte Schneidmodul (d.h., insbesondere ein Rahmen des Schneidmoduls, an dem der Schneidkörper 12, die Stülphülse 13 und die Zentriervorrichtung 14 gelagert sind) in Richtung zu der Kabelklemmvorrichtung 5 bis hin zu der gewünschten Position bewegt werden. Hierbei würden die Kabelklemmvorrichtung 5 und das darin fixierte Kabel 1 an der Ausgangsposition verbleiben.

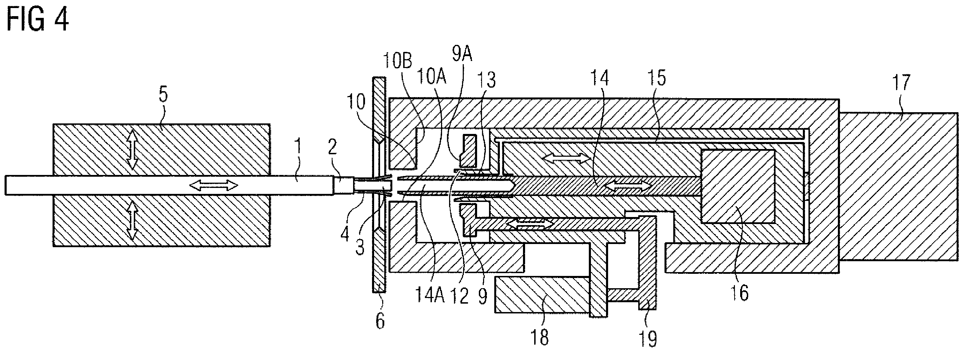

Unter Bezugnahme auf die Fig. 4 ist gezeigt, wie das Kabel 1, insbesondere dessen Innenteil 3, durch die Zentriervorrichtung 14 zentriert wird. Im Einzelnen wird die Zentriervorrichtung 14 durch eine Antriebseinheit 16 in der Axialrichtung zu dem zu bearbeitenden Kabelende des Kabels 1 gesteuert bewegt. Durch die Aufweitung der Schirmung 4 an dem Kabelende kann die Zentriervorrichtung 14 zwischen die Schirmung 4 und das Innenteil 3 bzw. auf den Bereich des Innenteils 3, der nicht mehr von der Schirmung 4 umgeben ist, fahren. Dabei wird ein Stirnende des Innenteils 3 in den Innenkanal 14A der Zentriervorrichtung 14 eingeführt bzw. die Zentriervorrichtung 14 auf das Innenteil 3 aufgeschoben. Mit dem Stirnende des Innenteils 3 in den Innenkanal 14A der Zentriervorrichtung 14 ist das Kabel 1 zentriert. Mit anderen Worten gesagt, wird die Zentriervorrichtung 14 in der Axialrichtung bis zu einer gewünschten definierten Position verfahren, in der die Zentriervorrichtung 14 den Innenteil 3 des Kabels 1 mithilfe des Innenkanals 14A aufgefädelt bzw. eingefädelt hat.

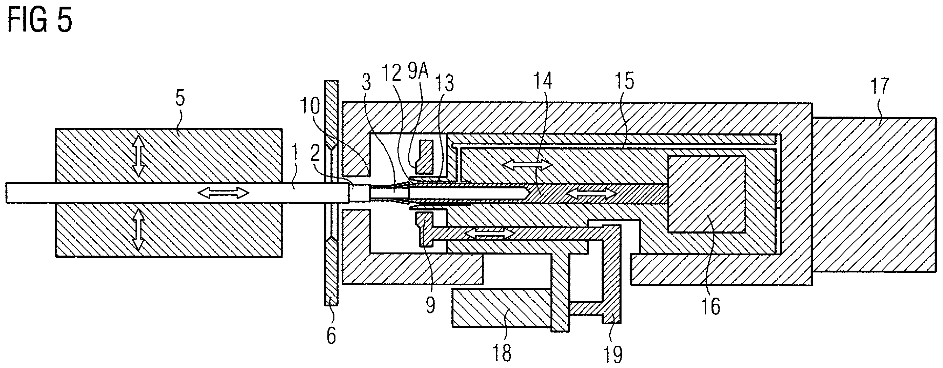

Wie in der Fig. 5 gezeigt ist, wird nachfolgend die Aufweitungsvorrichtung 6 geöffnet und das Kabel 1 kann somit weiter in das Schneidmodul eingefahren werden. Im Einzelnen wird das Kabel 1 durch gesteuertes, axiales Verfahren der Kabelklemmvorrichtung 5 so weit in Richtung des Schneidmoduls bewegt, bis die Vorderkante der Stützhülse 2 und die Anlagefläche 10B der Matrize 10 bündig sind, d.h. in einer gemeinsamen Ebene liegen. Während des Verfahrvorgangs des Kabels 1 wird die Antriebseinheit 16 der Zentriervorrichtung 14 so gesteuert, dass sich die Zentriervorrichtung 14 synchron mit dem sich bewegenden Kabel 1 mitbewegt. Das Stirnende des Innenteils 3 des Kabels 1 verbleibt ununterbrochen in dem Innenkanal 14A der Zentriervorrichtung 14. Die Synchronbewegung zwischen dem Einfahren des Kabels 1 in das Schneidmodul und der Axialbewegung der Zentriervorrichtung 14 kann von einer nicht dargestellten Steuerung gesteuert und überwacht werden.

Es sollte beachtet werden, dass die relative Axialbewegung zwischen dem Kabel 1 und dem Schneidmodul (mit Ausnahme der Zentriervorrichtung, die synchron mitbewegt wird und sich dabei im Schneidmodul relativ zu den übrigen Komponenten des Schneidmoduls bewegt) auch derart erfolgen kann, dass das Schneidmodul in Richtung zu der Kabelklemmvorrichtung 5 mittels eines nicht näher dargestellten Antriebs verfahren wird. Erneut verbleibt die Kabelklemmvorrichtung 5 und das darin fixierte Kabel 1 in deren Ausgangsposition.

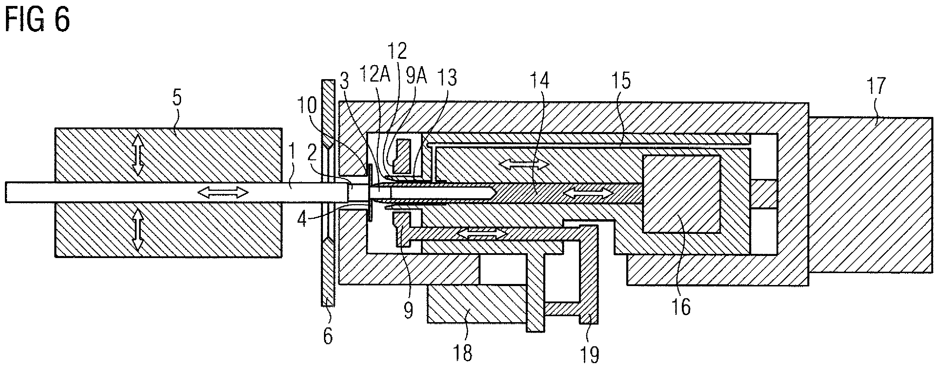

Unter Bezugnahme auf Fig. 6 ist gezeigt, dass die Schirmung 4 weiter aufgeweitet wird. Diese Aufweitung erfolgt einerseits durch eine Bewegung der Zentriervorrichtung 14 in Richtung zu dem Kabel 1, bei der eine Außenkonusringfläche an der Zentriervorrichtung 14 sich zwischen den Innenteil 3 und die Schirmung 4 schiebt. Zudem wird von der Druckluftquelle ein Druckluftstrom durch den Druckluftkanal 15 zugeführt, der die Schirmung 4 weiter aufstellt. Mithilfe der Zentriervorrichtung 14 und der Druckluft der Druckluftquelle wird die Schirmung 4 schließlich so weit aufgeweitet, bis sie sich an die Anlagefläche 10B der Matrize 10 (zumindest teilweise) anlegt bzw. in deren Nähe kommt. Die Schirmung 4 steht somit in einer Radialrichtung im Wesentlichen senkrecht von dem Innenteil 3 (der Längsachse) des Kabels 1 weg. Bevorzugt ist die Schirmung 4 im aufgeweiteten Zustand nicht mehr mit der Zentriervorrichtung 14 in Kontakt. Weiter liegt die Schirmung 4 bevorzugt in einer Ringform an der Anlagefläche 10B der Matrize 10 an. Der Innendurchmesser der Ringform der Schirmung 4 grenzt dabei an eine Stirnfläche der Stützhülse 2.

In Fig. 7 ist ein Zustand gezeigt, in dem die ringförmig aufgeweitete Schirmung 4 zwischen der ringförmigen Klemmfläche 9A an der Schirmungsklemmvorrichtung 9 und der Anlagefläche 10B der Matrize 10 fixiert bzw. eingeklemmt ist. Hierzu wurde die Schirmungsklemmvorrichtung 9 von der dritten Antriebseinheit 18 in Richtung zu dem Kabel 1 bzw. der Matrize 10 bewegt.

In einer alternativen Ausführungsform könnte die Schirmungsklemmvorrichtung 9 ohne eigene Antriebseinheit ausgebildet sein. Zum Beispiel kann die Schirmungsklemmvorrichtung 9 mit der Stülphülse und/oder dem Schneidkörper 12 mittels einer oder mehrerer vorspannbarer Federn verbunden sein. Zum Einklemmen der aufgeweiteten Schirmung 4 kann dann so erfolgen, dass über einen Auslösemechanismus (z.B. das Lösen einer Klinke) die vorgespannte(n) Feder(n) freigegeben werden. Die Schirmungsklemmvorrichtung 9 bewegt sich dann unter dem Einfluss der sich entspannenden Feder(n) in Richtung zu den Anlagefläche 10B der Matrize 10 und klemmt schließlich die aufgeweitete Schirmung 4 zwischen der Klemmfläche 9A und der Anlagefläche 9B ein. Zu einem späteren Verfahrensschritt wird/werden die Federn dann wieder vorgespannt, sodass sie erneut ausgelöst werden kann/können. Dieses Vorspannen kann bspw. durch eine Axialbewegung des Schneidköpers 12 und/oder der Stülphülse 13 aus der Durchgangsöffnung 10A heraus nach dem Schneid- bzw. Umstülpvorgang geschehen. Hierbei kann bspw. die Klinke des Auslösemechanismus mitgenommen und in eine Raststellung bewegt werden, in der die Feder(n) vorgespannt sind.

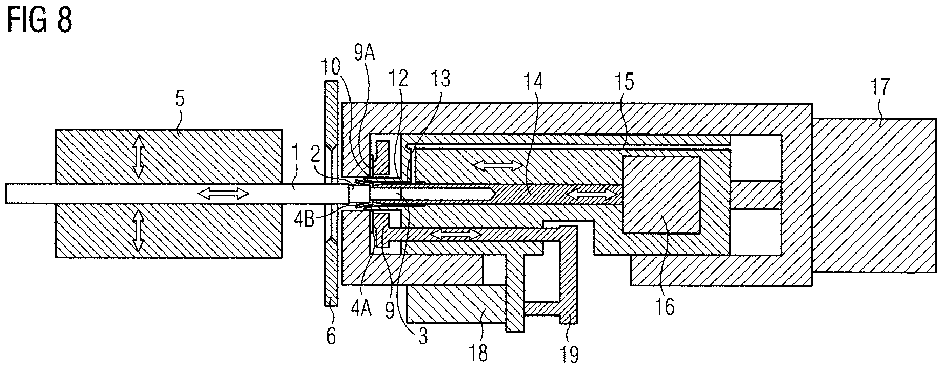

Die Bewegung der Schirmungsklemmvorrichtung 9 geht einer in Fig. 8 gezeigten Bewegung des Schneidkörpers 12 vor. Der Schneidkörper 12 wird von der zweiten Antriebseinheit 17 gesteuert in der Axialrichtung bewegt. Durch die gesteuerte axiale Bewegung des Schneidkörpers 12 wird die aufgestellte und fixierte Schirmung 4 zwischen der Matrize 10 und dem ringförmigen Schneidkörper 12 abgeschert (und nachfolgend umgestülpt). Es verbleiben ein nicht abgeschnittener Bereich 4A der Schirmung 4 am Kabel 1 und ein abgeschnittener Bereich 4B der Schirmung 4 in der eingeklemmten Position zwischen der Anlagefläche 10B und der Klemmfläche 9A. In einigen Ausführungsformen kann die Schneidbewegung durch den Schneidkörper 12 zusätzlich eine Rotationsbewegung um die Längsachse aufweisen.

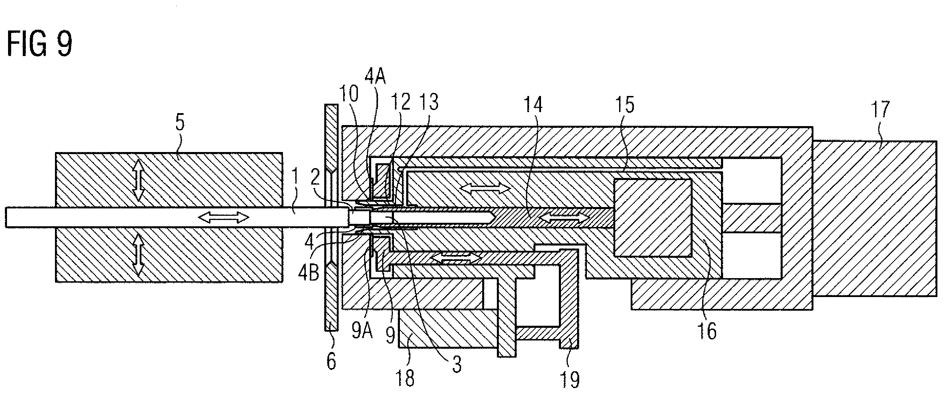

In Fig. 9 ist gezeigt, wie der nicht abgetrennte Schirmungsbereich 4A an der Stützhülse 2 angelegt wird. Dazu wird die Stülphülse 13, insbesondere die Innenkonusringfläche innerhalb der Schneidkante 12A, über den verbleibenden Bereich 4A bewegt. Der Bereich 4A der Schirmung 4 wird damit an der Stirnfläche der Stützhülse 2 auf dieselbe umgestülpt.

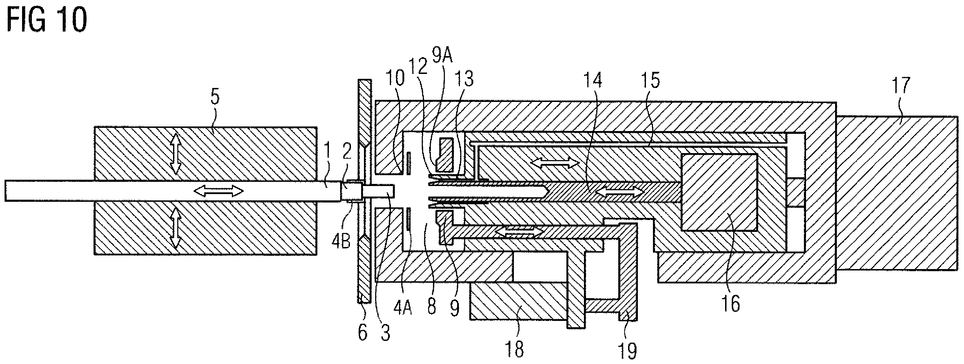

Unter Bezugnahme auf Fig. 10 ist einerseits gezeigt, dass das Kabel 1 aus dem Schneidmodul bis hin zu einer definierten Position heraus bewegt wird. Andererseits ist gezeigt, dass die Schirmungsklemmvorrichtung 9 von der Matrize 10 wegbewegt wird und dabei den abgestanzten Bereich 4B der Schirmung 4 freigibt. Dieser Bereich 4B kann entweder allein unter der Wirkung der Schwerkraft in einen Abführkanal 8 fallen oder unterstützt durch die nicht dargestellte, mit dem Abführkanal 8 verbundene Ansaugvorrichtung aus dem Arbeitsraum des Schneidmoduls entfernt werden.

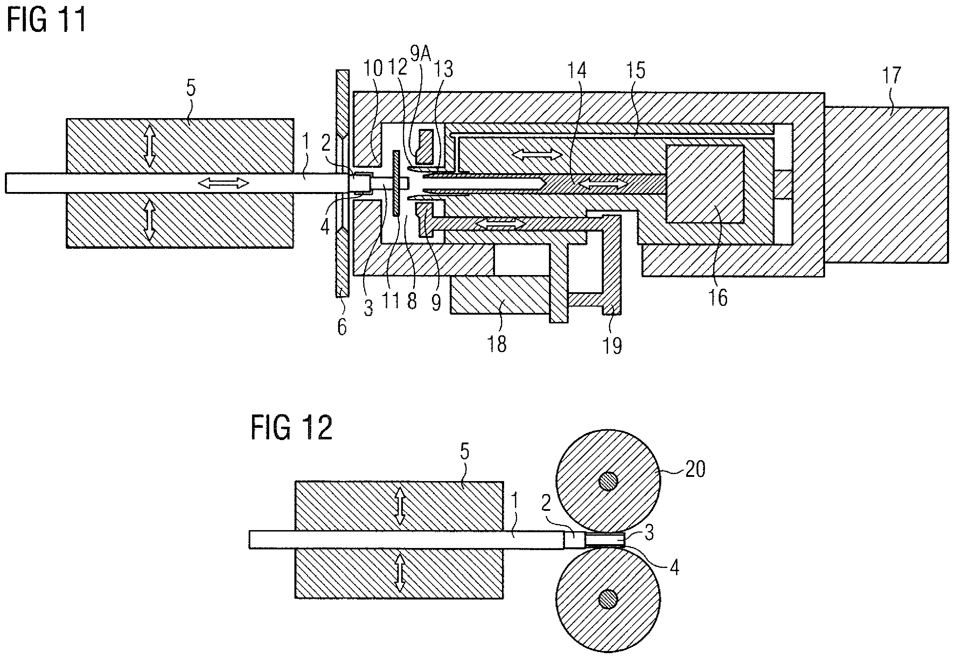

Schließlich wird, wie in Fig. 11 gezeigt ist, das vordere Ende des Kabels 1, das insbesondere nicht von der Schirmung 4 umgeben ist, also das Innenteil 3, abisoliert. Hierzu wird die Schneidvorrichtung 11 betätigt und die Isolation des Innenteils 3 des Kabels 1 eingeschnitten. Nachfolgend wird das vordere Ende der Isolation durch ein Verfahren des Kabels 1 in der Axialrichtung (beispielsweise durch eine Bewegung der Kabelklemmvorrichtung 5 und/oder eine Bewegung des gesamten Schneidmoduls) an der von der Schneidvorrichtung 11 bewirkten Einschnittstelle abgezogen. Die abgezogene Isolierung kann ähnlich dem abgetrennten Bereich 4B der Schirmung 4 durch die Schwerkraft (und eine optionale Absaugung) in einen Abführkanal 8 gelangen und aus dem Arbeitsraum des Schneidmoduls entfernt werden.

Die Bearbeitung durch das Schneidmodul ist somit beendet. Das Kabel 1 kann jetzt manuell oder automatisch entnommen oder weitertransportiert werden.

In Fig. 12 ist zusätzlich ein Verfahrensschritt gezeigt, der vor der Bearbeitung in der Aufweitungsvorrichtung 6 und in dem Schneidmodul ausgeführt werden kann, um das Bearbeitungsergebnis zu verbessern. Hierbei wird das abgemantelte Kabelende unter der Wirkung von einer oder mehrerer Bürsten 20, zum Beispiel drehbaren Bürsten wie in Fig. 12 dargestellt ist, bearbeitet. Die drehbaren Bürsten 20 bürsten das Geflecht der Schirmung 4 glatt und vergleichmäßigen dieses somit insbesondere im Bereich des Stirnendes der Schirmung 4 an der Stirnseite des Kabels 1. Es hat sich gezeigt, dass der Vorprozess des Glattbürstens der Schirmung 4 insbesondere die Aufweitung durch die Aufweitungsvorrichtung 6 sowie im späteren Bearbeitungsverlauf durch die Zentriervorrichtung 14 und die Druckluft vergleichmäßigt.

In einer weiteren Ausführungsform ist die Kabelklemmvorrichtung in der Axialrichtung in Richtung zu der Matrize bewegbar. Zusätzlich oder alternativ sind der Schneidkörper und die Zentriervorrichtung an einem Rahmen gelagert, der in der Axialrichtung in Richtung zu der Kabelklemmvorrichtung bewegbar ist.

Die hier verwendeten Begriffe "ungefähr", "etwa", "circa", "im Wesentlichen" oder "im Allgemeinen", die in Zusammenhang mit einem messbaren Wert wie beispielsweise einem Parameter, einer Menge, einer Form, einer zeitlichen Dauer oder dergleichen verwendet werden, schließen Abweichungen oder Schwankungen von ± 10% oder weniger, vorzugsweise ± 5% oder weniger, weiter vorzugsweise ± 1% oder weniger und weiter vorzugsweise ± 0,1% des jeweiligen Wertes oder von dem jeweiligen Wert mit ein, sofern diese Abweichungen bei der Umsetzung der offenbarten Erfindung in die Praxis noch technisch sinnvoll sind. Es wird ausdrücklich darauf hingewiesen, dass der Wert, auf den sich der Begriff "ungefähr" bezieht, als solcher ausdrücklich und im Besonderen offenbart ist. Die Angabe von Bereichen durch Anfangs- und Endwerte umfasst all diejenigen Werte und Bruchteile dieser Werte, die von dem jeweiligen Bereich eingeschlossen sind, wie auch dessen Anfangs- und Endwerte.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 1: Kabel
- 2: Stützhülse
- 3: Innenteil
- 4: Schirmung
- 5: Erste Klemmvorrichtung (Kabelklemmvorrichtung)
- 6: Aufweitungsvorrichtung
- 7: Auslöser
- 8: Abführkanal
- 9: Zweite Klemmvorrichtung (Schirmungsklemmvorrichtung)
- 9A: Klemmfläche
- 10: Matrize
- 10A: Durchgangsöffnung
- 10B: Anlagefläche
- 11: Schneidvorrichtung
- 12: Schneidkörper
- 12A: Schneidkante
- 13: Stülphülse
- 13A: erster Bereich
- 13B: zweiter Bereich
- 14: Zentriervorrichtung
- 14A: Innenkanal
- 15: Druckluftkanal
- 16: Erste Antriebseinheit für Zentriervorrichtung
- 17: Zweite Antriebseinheit für Schneidkörper
- 18: Dritte Antriebseinheit für zweite Klemmvorrichtung
- 19: Führung der zweiten Klemmvorrichtung
- 20: Bürste

## Patentansprüche

1. Vorrichtung zum Bearbeiten eines Kabelendes eines Kabels (1) mit einem Innenteil (3) und einer den Innenteil (3) konzentrisch umgebenden Schirmung (4), mit
einer Matrize (10), die eine Durchgangsöffnung (10A) in einer Axialrichtung aufweist,
einer Zentriervorrichtung (14), die von einer ersten Antriebseinheit (16) in der Axialrichtung in Richtung zu der Matrize (10) bewegbar ist und die einen Innenkanal (14A) aufweist, der so angepasst ist, dass der Innenteil (3) des Kabels (1) in den Innenkanal (14A) einführbar ist, wobei die Schirmung (4) beim Einführen des Innenteils (3) aufgeweitet wird und das Kabel (1) von der Zentriervorrichtung (14) zentriert gehalten wird, und
einem Schneidkörper (12), der von einer zweiten Antriebseinheit (17) in der Axialrichtung in Richtung zu der Matrize (10) bewegbar ist und eine Schneidkante (12A) aufweist, die so ausgebildet ist, dass sie einen Bereich (4B) der aufgeweiteten Schirmung (4) des Kabels (1) durch eine Bewegung des Schneidkörpers (12) in die Durchgangsöffnung (10A) der Matrize (10) abtrennt,
bei der die erste Antriebseinheit (16) unabhängig von der zweiten Antriebseinheit (17) vorgesehen ist und
bei der die Matrize (10) ferner eine an die Durchgangsöffnung (10A) angrenzende, senkrecht zur Axialrichtung verlaufende Anlagefläche (10B) aufweist und der abzutrennende Bereich (4B) der aufgeweiteten Schirmung (4) des Kabels (1) zumindest teilweise an der Anlagefläche (10B) anliegt, wenn der Schneidkörper (12) sich in die Durchgangsöffnung (10A) der Matrize (10) bewegt und dabei den abzutrennenden Bereich (4B) abtrennt,
ferner mit
einer Schirmungsklemmvorrichtung (9), die von einer dritten Antriebseinheit (18) in der Axialrichtung in Richtung zu der Matrize (10) bewegbar ist und eine Klemmfläche (9A) aufweist, die so ausgebildet ist, dass die aufgeweitete Schirmung (4) zwischen der Klemmfläche (9A) und der Anlagefläche (10B) einklemmbar ist,
bei der die Schirmungsklemmvorrichtung (9) so unmittelbar oder mittelbar an dem Schneidkörper (12) gelagert ist, dass eine durch die zweite Antriebseinheit (17) bewirkte Bewegung des Schneidkörpers (12) zu einer entsprechenden Bewegung der Schirmungsklemmvorrichtung (9) führt und eine durch die dritte Antriebseinheit (18) bewirkte Bewegung der Schirmungsklemmvorrichtung (9) zu keiner entsprechenden Bewegung des Schneidkörpers (12) führt.

2. Vorrichtung nach Anspruch 1, bei der
die erste Antriebseinheit (16) dazu ausgebildet ist, die Zentriervorrichtung (14) gesteuert zu bewegen.

3. Vorrichtung nach einem der vorherigen Ansprüche, ferner mit
einem Druckluftkanal (15), der mit einer Druckluftquelle verbunden ist und in einen Ringraum mündet, der eine Außenmantelfläche der Zentriervorrichtung (14) umgibt, zum Zuführen von Druckluft zur Aufweitung der Schirmung (4).

4. Vorrichtung nach einem der vorherigen Ansprüche, ferner mit
einer Stülphülse (13), die in der Axialrichtung in Richtung zu der Matrize (10) bewegbar und dazu ausgebildet ist, bei einer Bewegung in die Durchgangsöffnung (10A) einen nicht von dem Schneidkörper (12) abgetrennten Bereich (4A) der aufgeweiteten Schirmung (4) in einer Richtung entgegengesetzt zu der Zentriervorrichtung (14) umzustülpen.

5. Vorrichtung nach Anspruch 4, bei der
die Stülphülse (13) mit dem Schneidkörper (12) verbunden, insbesondere integral ausgebildet, ist, und/oder
die Zentriervorrichtung (14) innerhalb der Stülphülse (13) axial verschiebbar geführt wird.

6. Vorrichtung nach einem der vorherigen Ansprüche, ferner mit
einem Abführkanal (8), der mit einer Ansaugquelle verbunden und so angeordnet ist, dass durch eine Eingangsöffnung des Abführkanals (8) während des Bearbeitungsvorgangs abgetrennte Teile des Kabels (1) absaugbar sind.

7. Vorrichtung nach einem der vorherigen Ansprüche, ferner mit
eine Aufweitungsvorrichtung (6), die dazu ausgebildet ist, die Schirmung (4) des Kabels (1) umlaufend an mehreren Punkten zu quetschen, sodass die Schirmung (4) sich radial aufweitet, und/oder
einer Kabelklemmvorrichtung (5), die dazu ausgebildet ist, das Kabel (1) während der Bearbeitung in der Kabelklemmvorrichtung (5) zu fixieren, und die insbesondere dazu ausgebildet ist, relativ zu der Matrize (10), der Zentriervorrichtung (14) und/oder dem Schneidkörper (12) bewegbar zu sein.

## Claims

1. A device for processing a cable end of a cable (1) including an inner part (3) and a shield (4) concentrically surrounding the inner part (3), comprising
a die (10) including a penetrating opening (10A) in an axial direction,
a centering device (14) movable in the axial direction towards the die (10) by a first drive unit (16) and including an inner passage (14A) adapted such that the inner part (3) of the cable (1) is insertable into the inner passage (14A), wherein the shield (4) is widened upon insertion of the inner part (3) and the cable (1) is held in a centered position by the centering device (14), and
a cutting body (12) movable in the axial direction towards the die (10) by a second drive unit (17) and including a cutting edge (12A) configured such that the cutting edge cuts off a portion (4B) of the widened shield (4) of the cable (1) by movement of the cutting body (12) into the penetrating opening (10A) of the die (10),
wherein the first drive unit (16) is provided independent of the second drive unit (17) and
wherein the die (10) further includes an abutment surface (10B) perpendicular to the axial direction and adjacent to the penetrating opening (10A), and the portion (4B) of the widened shield (4) of the cable (1) to be cut off abuts at least in part on the abutment surface (10B) when the cutting body (12) moves into the penetrating opening (10A) of the die (10) and thereby cuts off the portion (4B) to be cut off,
further comprising
a shield clamping device (9) movable in the axial direction towards the die (10) by a third drive unit (18) and including a clamping surface (9A) configured to clamp the widened shield (4) between the clamping surface (9A) and the abutment surface (10B),
wherein the shield clamping device (9) is supported directly or indirectly on the cutting body (12) such that a movement of the cutting body (12) caused by the second drive unit (17) results in a corresponding movement of the shield clamping device (9), and a movement of the shield clamping device (9) caused by the third drive unit (18) does not result in a corresponding movement of the cutting body (12).

2. The device of claim 1, wherein
the first drive unit (16) is configured to move the centering device (14) in a controlled manner.

3. The device of any of the preceding claims, further comprising
a pressurized air passage (15) connected to a pressurized air source and opening into an annular space surrounding an outer surface of the centering device (14) for supplying pressurized air to widen the shield (4).

4. The device of any one of the preceding claims, further comprising
a sleeve (13) movable in the axial direction towards the die (10) and configured to, upon movement into the penetrating opening (10A), fold over a portion (4A) of the widened shield (4) not separated by the cutting body (12) in a direction opposite to the centering device (14).

5. The device of claim 4, wherein
the sleeve (13) is connected to the cutting body (12), in particular, integrally formed with the same, and/or
the centering device (14) is guided in the sleeve (13) in an axially movable manner.

6. The device of any one of the preceding claims, further comprising
a discharge passage (8) connected to a suction source and arranged such that separated parts of the cable (1) can be sucked away through an inlet opening of the discharge passage (8) during the processing.

7. The device of any one of the preceding claims, further comprising
a widening device (6) configured to clamp the shield (4) of the cable (1) at a plurality of positions in a peripheral direction to radially widen the shield (4), and/or
a cable clamping device (5) configured to fix the cable (1) in the cable clamping device (5) during the processing, the cable clamping device being particularly configured to be movable relative to the die (10), the centering device (14), and/or the cutting body (12).

## Revendications

1. Dispositif pour traiter une extrémité de câble d'un câble (1) avec une partie intérieure (3) et un blindage (4) entourant la partie intérieure (3) de manière concentrique, avec
une matrice (10) qui présente une ouverture de passage (10A) dans une direction axiale,
un dispositif de centrage (14), qui est rendu mobile par une première unité d'entraînement (16) dans la direction axiale en direction de la matrice (10) et qui présente un canal intérieur (14A) qui est adapté de sorte que la partie intérieure (3) du câble (1) puisse être introduite dans le canal intérieur (14A), dans lequel le blindage (4), lors de l'introduction de la partie intérieure (3), est élargi et le câble (1) est maintenu centré par le dispositif de centrage (14), et
un corps de coupe (12), qui est rendu mobile par une deuxième unité d'entraînement (17) dans la direction axiale en direction de la matrice (10) et qui présente un bord de coupe (12A), qui est réalisé de façon à séparer une zone (4B) du blindage élargi (4) du câble (1) par un mouvement du corps de coupe (12) dans l'ouverture de passage (10A) de la matrice (10),
dans lequel la première unité d'entraînement (16) est prévue indépendamment de la deuxième unité d'entraînement (17) et
dans lequel la matrice (10) présente en outre une surface de contact (10B) adjacente à l'ouverture de passage (10A), s'étendant perpendiculairement à la direction axiale, et la zone à séparer (4B) du blindage élargi (4) du câble (1) s'applique au moins partiellement sur la surface de contact (10B), lorsque le corps de coupe (12) se déplace dans l'ouverture de passage (10A) de la matrice (10) et, ce faisant, sépare la zone à séparer (4B),
en outre avec
un dispositif de serrage de blindage (9), qui est rendu mobile par une troisième unité d'entraînement (18) dans la direction axiale en direction de la matrice (10) et qui présente une surface de serrage (9A), qui est réalisée de sorte que le blindage élargi (4) puisse être serré entre la surface de serrage (9A) et la surface de contact (10B),
dans lequel le dispositif de serrage de blindage (9) est logé de manière directe ou indirecte dans le corps de coupe (12) de sorte qu'un mouvement du corps de coupe (12), produit par la deuxième unité d'entraînement (17), entraîne un mouvement correspondant du dispositif de serrage de blindage (9) et qu'un mouvement du dispositif de serrage de blindage (9), produit par la troisième unité d'entraînement (18), n'entraîne pas de mouvement correspondant du corps de coupe (12).

2. Dispositif selon la revendication 1, dans lequel
la première unité d'entraînement (16) est réalisée pour mouvoir le dispositif de centrage (14) de manière commandée.

3. Dispositif selon l'une quelconque des revendications précédentes, en outre avec
un canal à air comprimé (15), qui est raccordé à une source d'air comprimé et qui débouche dans un espace annulaire qui entoure une surface d'enveloppe extérieure du dispositif de centrage (14) pour amener de l'air comprimé en vue d'élargir le blindage (4).

4. Dispositif selon l'une quelconque des revendications précédentes, en outre avec
un fourreau (13), qui est mobile dans la direction axiale en direction de la matrice (10) et est réalisé pour, lors d'un mouvement dans l'ouverture de passage (10A), relever une zone (4A) du blindage élargi (4) non séparée par le corps de coupe (12) dans une direction opposée au dispositif de centrage (14).

5. Dispositif selon la revendication 4, dans lequel
le fourreau (13) est relié au corps de coupe (12), en particulier, est réalisé intégralement, et/ou
le dispositif de centrage (14) est guidé de manière à pouvoir coulisser axialement à l'intérieur du fourreau (13).

6. Dispositif selon l'une quelconque des revendications précédentes, avec en outre
un canal d'évacuation (8), qui est raccordé à une source d'aspiration et est disposé de sorte que des parties séparées du câble (1) puissent être aspirées par une ouverture d'entrée du canal d'évacuation (8) pendant le processus de traitement.

7. Dispositif selon l'une quelconque des revendications précédentes, avec en outre
un dispositif d'élargissement (6), qui est réalisé pour presser le blindage (4) du câble (1) à sa périphérie en plusieurs points, de sorte que le blindage (4) s'élargisse radialement, et/ou
un dispositif de serrage de câble (5), qui est réalisé pour fixer le câble (1) pendant le traitement dans le dispositif de serrage de câble (5), et qui, en particulier, est réalisé pour être mobile relativement à la matrice (10), au dispositif de centrage (14) et/ou au corps de coupe (12).
